# EUROPÄISCHE PATENTANMELDUNG

(11) **EP 0 653 569 A1**
(43) Veröffentlichungstag der Anmeldung: **17.05.1995**
(21) Anmeldenummer: 94115247.2
(22) Anmeldetag: 28.09.1994
(51) Int. Cl.: F16B 12/14

(54) **Beschlag zur Verbindung aneinanderstossender Konstruktionselemente**

(30) Priorität: 22.10.1993 DE 9316140 U
(71) Anmelder: HÄFELE GmbH & Co., D-72202 Nagold (DE)
(72) Erfinder: Riegler, Ulrich, D-71131 Jettingen (DE); Walz, Rüdiger, D-71159 Mötzingen (DE)
(74) Vertreter: Schmid, Berthold, Dipl.-Ing.

(57) **Zusammenfassung**

Um einen Beschlag zur Verbindung aneinanderstoßender Konstruktionselemente, insbesondere von platten- oder balkenförmigen Elementen für Möbel, zu schaffen, mit wenigstens einem Sockel 3 , sowie wenigstens einem Gehäuse 2, wobei der Sockel 3 mit dem einen Element und das Gehäuse 2 mit dem anderen Element verbunden ist und wobei der Sockel 3 und das Gehäuse 2 miteinander verrastbar sind, der eine stabile Verbindung der entsprechenden Möbelelemente erlaubt und sich mit geringem Aufwand herstellen läßt, weist der Sockel 3 wenigstens ein Halteteil 4 sowie wenigstens ein damit verbindbares Rastteil 5 auf und ist der Sockel 3 mittels des Halteteils 4 mit dem zugeordneten Element verbunden und mittels des Rastteils 5 mit dem Gehäuse 2 verrastbar.

## Beschreibung

Die Erfindung betrifft einen Beschlag zur Verbindung aneinanderstoßender Konstruktionselemente, insbesondere von platten- oder balkenförmigen Elementen für Möbel, mit wenigstens einem Sockel sowie wenigstens einem Gehäuse, wobei der Sockel mit dem einen Element und das Gehäuse mit dem anderen Element verbunden ist und wobei der Sockel und das Gehäuse miteinander verrastbar sind.

Insbesondere im Möbelbau sind häufig aneinanderstoßende Konstruktionselemente, beispielsweise senkrecht stehende Wandelemente und waagerechte Boden-, Decken- oder Zwischenplatten miteinander zu verbinden. Zu diesem Zweck werden bekanntermaßen Möbelkantenbeschläge verwendet, die sich aus einem Sockel sowie aus einem Gehäuse zusammensetzen. Zur Montage wird zunächst der Sockel mit dem einen und das Gehäuse mit dem anderen der zu verbindenden Möbelelemente verbunden. Anschließend werden die beiden Möbelelemente entsprechend der gewünschten Montagelage aneinander gesetzt. Dabei wird das an dem einen Möbelelement angebrachte Gehäuse des Beschlages über den an dem anderen Möbelelement angebrachten Sockel gestülpt. Entsprechende Rasten und Gegenrasten der Beschlagteile schaffen eine vorläufige Verbindung zwischen dem Gehäuse und dem Sockel und ermöglichen so eine vorläufige Fixierung und Ausrichtung der jeweils zugehörigen Möbelelemente. Zur endgültigen Verbindung der Möbelelemente wird das Gehäuse abschließend mit dem Sockel verschraubt.

Dementsprechend muß der Sockel zum einen in der Lage sein, die auf die Verbindung der Möbelelemente wirkenden Belastungen über die Verbindung mit dem Gehäuse aufzunehmen und in das ihm zugeordnete Möbelelement einzuleiten. Gleichzeitig müssen die Rastelemente des Sockels hinreichend elastisch sein, um nach dem Aufstülpen des Gehäuses mit dessen Gegenrasten eine wirksame formschlüssige Verbindung der Beschlagteile gewährleisten zu können. Bei den bekannten Beschlägen werden daher Sockel aus Edelstahl, insbesondere aus Federstahl, verwendet. Bei Edelstahl aber handelt es sich um einen hochwertigen Werkstoff, dessen Bearbeitung einen verhältnismäßig großen Aufwand erfordert. Dementsprechend hoch sind die mit der Herstellung von Sockeln für Möbelkantenbeschläge verbundenen Kosten. Insbesondere vor dem Hintergrund, daß Möbelkantenbeschläge, etwa im Falle von Regalsystemen, in großen Stückzahlen benötigt werden, stellen Sockel aus Edelstahl einen beachtenswerten Kostenfaktor dar.

Der Erfindung liegt nun die Aufgabe zugrunde, einen Beschlag zu schaffen, der eine stabile Verbindung der betreffenden Möbelelemente erlaubt und sich mit geringem Aufwand herstellen läßt.

Diese Aufgabe wird erfindungsgemäß dadurch gelöst, daß bei Beschlägen der eingangs genannten Art der Sockel wenigstens ein Halteteil sowie wenigstens ein damit verbindbares Rastteil aufweist und der Sockel mittels des Halteteils mit dem zugeordneten Element verbunden und mittels des Rastteils mit dem Gehäuse verrastbar ist. Durch die zweiteilige Ausbildung wird der Sockel in zwei Funktionselemente zerlegt, die entsprechend den ihnen zugeordneten Aufgaben ausgelegt werden können. So dient das Halteteil zur Übertragung der auf die Verbindung der betreffenden Möbelelemente wirkenden Belastungen. Den damit verbundenen Anforderungen kann beispielsweise durch die Wahl des Werkstoffes und/oder durch die Formgebung für das Halteteil entsprochen werden. In analoger Weise kann den Anforderungen an das Rastteil, das elastisch verformbar sein muß, Rechnung getragen werden. Durch die bauteilmäßige Funktionstrennung an dem Sockel wird die Möglichkeit eröffnet, hochwertige und somit kostspielige Werkstoffe an dem Beschlagteil nur dort zu verwenden, wo sie funktionsbedingt tatsächlich benötigt werden.

Vorteilhafterweise besteht das Rastteil aus Kunststoff. Rastteile aus Kunststoff lassen sich nämlich beispielsweise im Spritzgußverfahren in großen Stückzahlen mit geringem fertigungstechnischem sowie mit geringem finanziellem Aufwand herstellen. Bei entsprechender Wahl des Kunststoffes besitzt das Rastteil darüber hinaus hinreichende elastische Eigenschaften, die es in die Lage versetzen, eine wirksame Verbindung mit den Gegenrasten des aufgestülpten Gehäuses zu schaffen.

Das Halteteil des Sockels besteht zweckmäßigerweise aus Metall. In seiner Montagelage unterliegt das Halteteil in erster Linie Zug- und Druckbelastungen. Zu deren Aufnahme aber eignen sich bereits relativ geringwertige und somit kostengünstige metallische Werkstoffe. Federelastischer Eigenschaften bedarf das Halteteil nicht.

In vorteilhafter Ausgestaltung der Erfindung ist vorgesehen, daß das Rastteil einen Grundkörper sowie wenigstens ein Rastelement aufweist, wobei das Rastteil an dem Grundkörper mit dem Halteteil verbindbar und mittels des Rastelements mit wenigstens einer Gegenrast des Gehäuses verrastbar ist. Auf diese Art und Weise wird auch an dem Rastteil eine konstruktive Funktionstrennung vorgenommen. So kann der Grundkörper, an dem die Verbindung des Rastteils mit dem Halteteil hergestellt wird, zur Aufnahme der Verbindungskräfte verstärkt ausgebildet werden. Ein elastisches Verhalten wird von dem Grundkörper nicht gefordert. Die Rastelemente des Rastteils hingegen können konstruktiv so ausgelegt werden, daß sie die zum Verrasten mit dem Gehäuse erforderlichen elastischen Eigenschaften aufweisen.

Damit das Gehäuse einfach auf den Sockel aufgeschoben und gegenüber diesem zentriert werden kann ist zweckmäßigerweise vorgesehen, daß das Rastteil als Rastelemente zwei Rastarme aufweist und mit diesen in Einbaulage das Halteteil an gegenüberliegenden Seiten seitlich überragt.

Beim Bau von Möbeln muß berücksichtigt werden, daß die betreffenden Möbelstücke während ihrer Lebensdauer beispielsweise umzugsbedingt mehrfach auf- und wieder abgebaut werden. Um die Funktionstüchtigkeit auch nach wiederholter Demontage zu gewährleisten, ist bei dem erfindungsgemäßen Beschlag vorteilhafterweise vorgesehen, daß die Rastelemente dauerelastisch ausgebildet sind.

In bevorzugter Ausgestaltung der Erfindung ist das Halteteil als Profil mit im wesentlichen U-förmigem Querschnitt ausgebildet und umgreift das Rastteil in Einbaulage an drei Seiten an entsprechenden Gegenflächen. Bei einem derart ausgebildetem Beschlag ist zum einen sichergestellt, daß sich der Sockel über das Halteteil auf einer verhältnismäßig großen Fläche an dem zugehörigen Möbelelement abstützt. Infolgedessen ergibt sich eine stabile Verbindung zwischen dem Sockel und dem zugehörigen Möbelelement, die in der Lage ist, die auf die Verbindung der Möbelelemente wirkenden Belastungen zu übertragen. Gleichzeitig wird eine stabile Verbindung zwischen dem Halteteil und dem Rastteil erreicht, da sich das Rastteil an drei seiner Umfangsflächen an dem versteiften Halteteil abstützen kann.

Um eine schnelle und problemlose Verbindung von Halteteil und Rastteil zu ermöglichen, ist vorteilhafterweise vorgesehen, daß das Halteteil und das Rastteil miteinander verrastbar sind. Alternativ oder zusätzlich zu der Rastverbindung zwischen Halteteil und Rastteil kann zweckmäßigerweise vorgesehen sein, daß das Halteteil und das Rastteil miteinander verschraubbar sind.

Um die Möglichkeit zu schaffen, Montagetoleranzen zwischen Gehäuse und Sockel des Beschlages auszugleichen, ist in weiterer bevorzugter Ausgestaltung der Erfindung vorgesehen, daß sich das mit dem Halteteil verbundene Rastteil mit Spiel parallel zu der Oberfläche des zugeordneten Elements an dem Halteteil abstützt. Nach der vorläufigen Fixierung der Möbelelemente durch Verrasten des Gehäuses mit dem Sockel des Beschlages besteht nunmehr nämlich die Möglichkeit, das Gehäuse und den Sockel und somit auch die diesen Beschlagteilen zugeordneten Möbelelemente in ihrer vorläufigen Einbaulage relativ zueinander zu verschieben. Auf diese Art und Weise lassen sich die miteinander zu verbindenden Möbelelemente vor ihrer endgültigen Verbindung feinjustieren und an ihren Kanten bündig aneinander anschließen.

Zweckmäßigerweise ist dabei das Gehäuse mittels einer Schraubverbindung an dem relativ zu dem Halteteil verschiebbaren Rastteil mit dem Sockel verbindbar.

Die Erfindung wird nachfolgend anhand schematischer Darstellungen von Ausführungsbeispielen näher erläutert. Es zeigen:
- Fig. 1a: die Explosionsdarstellung einer ersten Ausführungsform eines Möbelkantenbeschlages mit zweiteiligem Sockel,
- Fig. 1b: den Möbelkantenbeschlag gemäß Fig. 1a mit verbundenen Sockelteilen,
- Fig. 1c: den Möbelkantenbeschlag gemäß Fig. 1a in Montagelage,
- Fig. 2a: die Explosionsdarstellung einer zweiten Ausführungsform eines Möbelkantenbeschlages mit zweiteiligem Sockel,
- Fig. 2b: den Möbelkantenbeschlag gemäß Fig. 2a mit verbundenen Sockelteilen und
- Fig. 2c: den Möbelkantenbeschlag gemäß Fig. 2a in Montagelage.

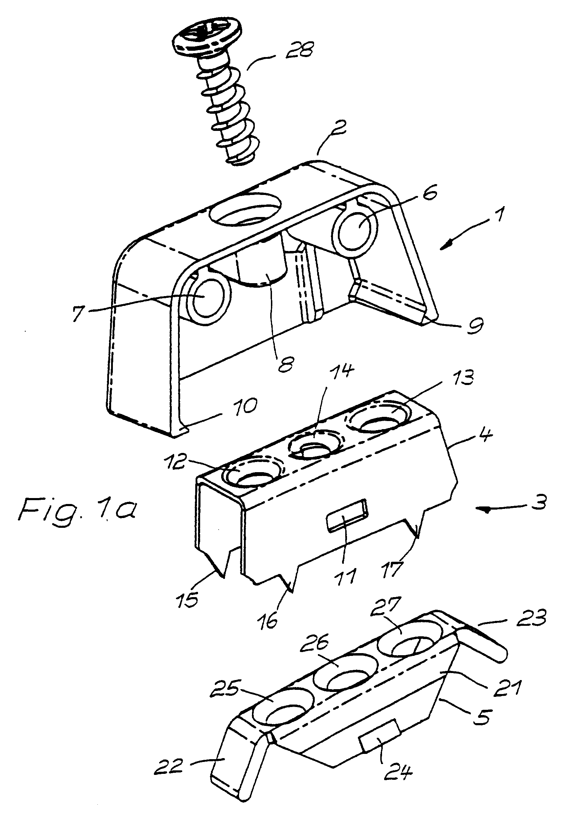

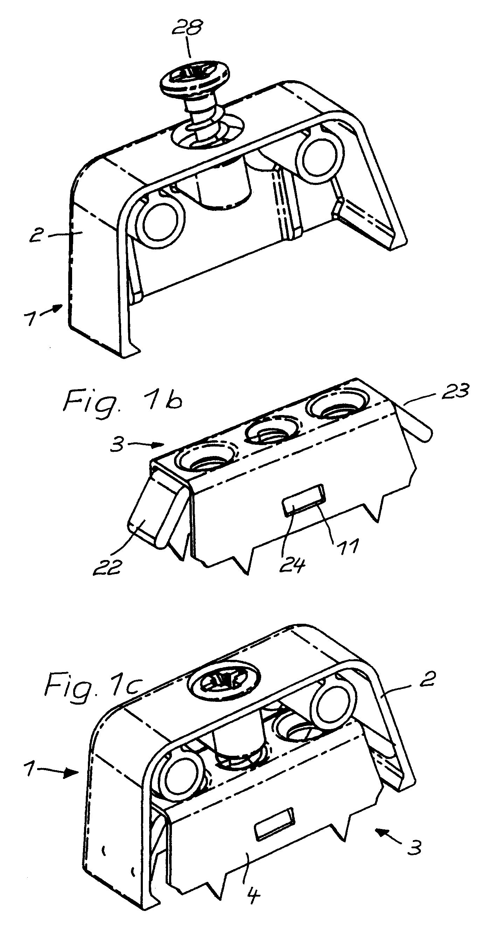

In den Fign. 1a bis 1c ist ein Beschlag 1 dargestellt, der aus einem Gehäuse 2 sowie einem Sockel 3 besteht. Der Sockel 3 setzt sich zusammen aus einem als Halteteil dienenden Halteprofil 4 sowie einem Rastteil 5. Das Gehäuse 2 des dargestellten Beschlages 1 besteht ebenso wie das Rastteil 5 aus Kunststoff; das Halteprofil 4 ist aus Blech gefertigt.

Das Gehäuse 2 ist nach zwei Seiten offen und trägt an seinen Innenwandungen Gewindehülsen 6, 7, 8. An die Flanken des Gehäuses 2 sind Raststege 9, 10 angeformt.

Das Halteprofil 4 des Sockels 3 besitzt einen U-förmigen Querschnitt. An den Schenkelflächen des Halteprofils 4 sind Rastöffnungen 11 vorgesehen, von denen in den Fign. 1a bis 1c aufgrund der gewählten Perspektive lediglich eine Rastöffnung erkennbar ist. Die die Schenkelflächen verbindende Stegfläche des Halteprofils 4 weist Montagebohrungen 12, 13, 14 auf. An die der Stegfläche abgewandten Seiten der Schenkelflächen sind jeweils zwei Klauen angeformt, von denen in den Fign. 1a bis 1c drei Klauen 15, 16, 17 gezeigt sind.

Das Rastteil 5 des Sockels 3 besitzt einen Grundkörper 21 sowie daran seitlich angeordnete Rastarme 22, 23. Auch der Grundkörper 21 des Rastteils 5 besitzt einen U-förmigen Querschnitt. An die trapezförmigen Schenkelflächen des Grundkörpers 21 ist jeweils eine Rastnase 24 angeformt. Die Stegfläche des Grundkörpers 21 weist drei Montagebohrungen 25, 26, 27 auf.

Wie die Fign. 1a bis 1c zeigen, wird bei der Montage zunächst das Halteprofil 4 auf das Rastteil 5 aufgeschoben. Dabei rastet das Rastteil 5 mit seinen Rastnasen 24 in die dafür vorgesehenen Rastöffnungen 11 des Halteprofils 4 ein. In Einrastlage umgreift das Halteprofil 4 das Rastteil 5 an den Schenkelflächen sowie an der Stegfläche. Die Montagebohrungen 12, 13, 14 des Halteprofils 4 sind in dieser Lage fluchtend mit den jeweils zugeordneten Montagebohrungen 25, 26, 27 des Rastteils 5 angeordnet. Die Rastarme 22, 23 des Rastteils 5 überragen das Halteprofil 4 seitlich.

Nach dem Verrasten von Halteprofil 4 und Rastteil 5 wird der gesamte Sockel 3 auf die diesem zugeordnete, nicht dargestellte Möbelplatte aufgesetzt, ausgerichtet und durch die Montagebohrungen 12, 25 und 13, 27 mit der Möbelplatte verschraubt. Beim Festdrehen der Befestigungsschrauben gräbt sich der Sockel 3 mit den Klauen 15, 16, 17 in die Möbelplatte ein und wird so gegen Verschieben parallel zur Oberfläche der Möbelplatte gesichert. Die den Sockel 3 mit der Möbelplatte verbindenden Befestigungsschrauben dienen gleichzeitig als zusätzliche Verbindungselemente zwischen dem Rastteil 5 und dem Halteprofil 4.

Das Gehäuse 2 wird über die Gewindehülsen 6, 7, 8 mit der ihm zugeordneten, ebenfalls nicht dargestellten Möbelplatte verschraubt. Anschließend werden die beiden miteinander zu verbindenden Möbelplatten entsprechend der gewünschten Einbaulage aneinander angesetzt. Dabei wird das Gehäuse 2 über den Sockel 3 gestülpt. Beim Aufstülpen des Gehäuses 2 läuft dieses zunächst mit seinen Raststegen 9, 10 auf die Rastarme 22, 23 des Sockels 3 auf. Die Rastarme 22, 23 geben unter der Wirkung der aufschiebenden Druckkraft nach und werden in Richtung auf die dem Sockel 3 zugeordnete Möbelplatte verschwenkt. Infolgedessen können die Raststege 9, 10 die Rastarme 22, 23 passieren. Sobald die Raststege 9, 10 an den Rastarmen 22, 23 vorbeigeschoben worden sind, schwenken diese aufgrund ihrer Elastizität wieder in Richtung auf ihre ursprüngliche Lage zurück. Dabei beaufschlagen sie die Innenwandung des Gehäuses 2 an dessen Flanken und sorgen dadurch für eine Zentrierung des Gehäuses 2 gegenüber dem Sockel 3. Gleichzeitig hintergreifen die Rastarme 22, 23 die Raststege 9, 10 des Gehäuses 2 und schaffen somit eine vorläufige formschlüssige Verbindung zwischen dem Gehäuse 2 und dem Sockel 3 in einer Richtung senkrecht zu der dem Sockel 3 zugeordneten Möbelplatte. In dieser Richtung kann das Gehäuse 2 nur noch gegen den Widerstand der Rastarme 22, 23 von dem Sockel 3 abgezogen werden. Zur endgültigen Verbindung des Gehäuses 2 mit dem Sockel 3 dient eine Befestigungsschraube 28, die durch die Gewindehülse 8 des Gehäuses 2 in die Montagebohrungen 14, 26 des Sockels 3 eingedreht wird und dabei eine feste, aber lösbare Verbindung zwischen den betreffenden Möbelplatten herstellt.

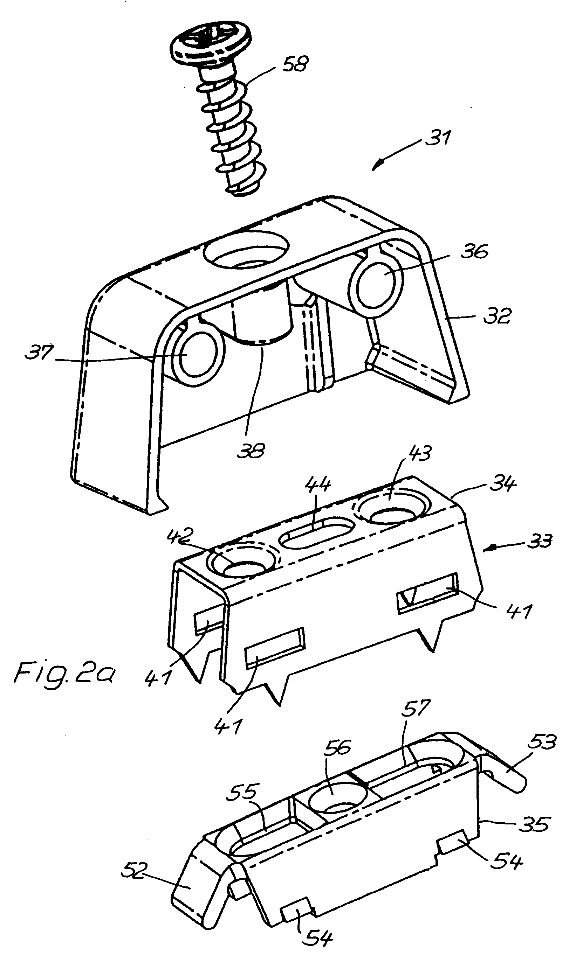

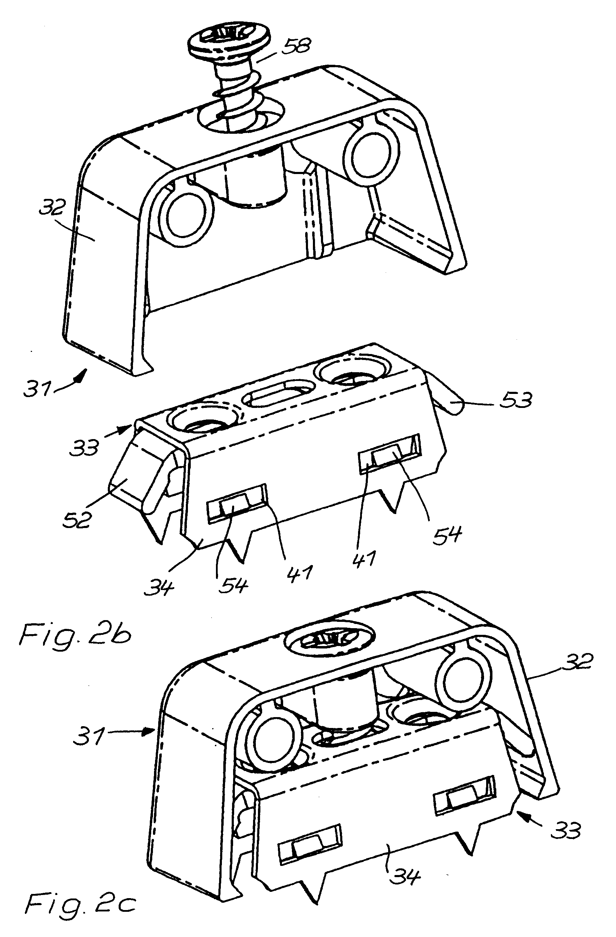

Die Fign. 2a bis 2c zeigen einen Beschlag 31, der hinsichtlich seines Aufbaus mit dem Beschlag 1 der Fign. 2a bis 2c grundsätzlich übereinstimmt. Auch der Beschlag 31 dient der Verbindung nicht dargestellter, rechtwinklig aneinanderstoßender Möbelplatten. Dabei ist eine Möbelplatte einem Gehäuse 32, die andere Möbelplatte einem Sockel 33 zugeordnet.

Ein wesentlicher Unterschied zu dem Beschlag 1 der Fign. 1a bis 1c ergibt sich bei dem Beschlag 31 der Fign. 2a bis 2c im Hinblick auf die konstruktive Gestaltung des Sockels 33. Die Funktionselemente des Sockels 33, ein als Halteteil dienendes Halteprofil 34 sowie ein damit verrastbares Rastteil 35 sind nämlich in Verraststellung relativ zueinander verschiebbar. Diese Relativbeweglichkeit des Halteprofils 34 und des Rastteils 35 wird durch entsprechende Dimensionierung von in den Schenkelflächen des Halteprofils 34 angeordneten Rastöffnungen 41 und von in die Rastöffnungen 41 eingreifenden Rastnasen 54 erreicht. Wie insbesondere Fig. 2b zu entnehmen ist, umschließen die Rastöffnungen 41 die Rastnasen 54 in Verraststellung von Halteprofil 34 und Rastteil 35 nicht formschlüssig sondern vielmehr mit Spiel parallel zu der Oberfläche der dem Sockel 33 zugeordneten Möbelplatte. Gleichzeitig sind in der Stegfläche des Rastteils 35 benachbart zu einer Montagebohrung 56 Langlöcher 55, 57 vorgesehen. Die Stegfläche des Halteprofils 34 weist zwischen Montagebohrungen 42, 43 ein Langloch 44 auf.

Zur Verbindung der aneinanderstoßenden Möbelplatten wird zunächst das Halteprofil 34 auf das Rastteil 35 aufgeschoben. Dabei rasten die Rastnasen 54 des Rastteils 35 in den Rastöffnungen 41 des Halteprofils 34 ein und werden in dieser Lage mit Spiel in Längsrichtung der Rastöffnungen 41 gehalten. Anschließend wird der Sockel 33 auf die diesem zugeordnete Möbelplatte aufgesetzt, ausgerichtet und durch die Montagebohrungen 42, 43 des Halteprofils 34 mit der Möbelplatte verschraubt. Die Befestigungsschrauben, mittels derer der Sockel 33 an der betreffenden Möbelplatte gehalten wird, durchdringen auch die Langlöcher 55, 57 des Rastteils 35, ohne sich jedoch mit deren Wandungen im Eingriff zu befinden. Infolgedessen läßt sich das Rastteil 35 auch nach Verschrauben des Sockels 33 mit der zugeordneten Möbelplatte in Längsrichtung der Rastöffnungen 41 relativ zu dem Halteprofil 34 verschieben.

Das Gehäuse 32 wird über Gewindehülsen 36, 37 mit der zugeordneten Möbelplatte verschraubt.

Nachdem nun die beiden Beschlaghälften mit den zugeordneten Möbelplatten fest verbunden sind, werden diese der Montagelage entsprechend aneinander angesetzt. Dabei wird das Gehäuse 32 auf den Sockel 33 aufgeschoben und mit diesem, wie vorstehend für den Beschlag 1 der Fign. 1a bis 1c beschrieben, verrastet. In der Verraststellung des Gehäuses 32 und des Sockels 33 stützt sich der Sockel 33 über Rastarme 52, 53 an den Flanken der Innenwandung des Gehäuses 32 ab. Da das Gehäuse 32 das Halteprofil 34 in Montagelage mit Spiel überdeckt und da das Rastteil 35 mittels einer Langlochführung mit Spiel an dem Halteprofil 34 gehalten wird, ergibt sich eine Beweglichkeit des Gehäuses 32 relativ zu dem mit der betreffenden Möbelplatte fest verbundenen Halteprofil 34. Die durch das Verrasten des Gehäuses 32 mit dem Sockel 33 vorläufig miteinander verbundenen Möbelplatten können infolgedessen gegeneinander verschoben werden. Auf diese Art und Weise lassen sich die Möbelplatten so anordnen, daß ihre Kanten bündig miteinander abschließen.

Zur endgültigen Verbindung der beiden Möbelplatten dient eine Befestigungsschraube 58, die durch eine Gewindehülse 38 an dem Gehäuse 32 in die Montagebohrung 56 des Rastteils 35 eingedreht wird. Unter der Wirkung der bei festgedrehter Befestigungsschraube 58 wirksamen Befestigungskraft in Schraubenlängsrichtung wird das Rastteil 35 an die Unterseite der Stegfläche des Halteprofils 34 gepreßt und an dieser reibschlüssig gehalten. Die Geometrie des Langloches 44 erlaubt vor der endgültigen Fixierung ein Verschieben des Gehäuses 32 mit dem über die Befestigungsschraube 58 damit verbundenen Rastteil 35 relativ zu dem fest mit der zugeordneten Möbelplatte verbundenen Halteprofil 34.

## Patentansprüche

1. Beschlag (1, 31) zur Verbindung aneinanderstoßender Konstruktionselemente, insbesondere von platten- oder balkenförmigen Elementen für Möbel, mit wenigstens einem Sockel (3, 33), sowie wenigstens einem Gehäuse (2, 32), wobei der Sockel (3, 33) mit dem einen Element und das Gehäuse (2, 32) mit dem anderen Element verbunden ist und wobei der Sockel (3, 33) und das Gehäuse (2, 32) miteinander verrastbar sind, dadurch gekennzeichnet, daß der Sockel (3, 33) wenigstens ein Halteteil (4, 34) sowie wenigstens ein damit verbindbares Rastteil (5, 35) aufweist und der Sockel (3, 33) mittels des Halteteils (4, 34) mit dem zugeordneten Element verbunden und mittels des Rastteils (5, 35) mit dem Gehäuse (2, 32) verrastbar ist.

2. Beschlag nach Anspruch 1, dadurch gekennzeichnet, daß das Rastteil (5, 35) aus Kunststoff besteht.

3. Beschlag nach Anspruch 1 oder 2, dadurch gekennzeichnet, daß das Halteteil (4, 34) aus Metall besteht.

4. Beschlag nach einem der Ansprüche 1 bis 3, dadurch gekennzeichnet, daß das Rastteil (5, 35) einen Grundkörper (21) sowie wenigstens ein Rastelement aufweist, wobei das Rastteil (5, 35) an dem Grundkörper (21) mit dem Halteteil (4, 34) verbindbar und mittels des Rastelements mit wenigstens einer Gegenrast des Gehäuses (2, 32) verrastbar ist.

5. Beschlag nach Anspruch 4, dadurch gekennzeichnet, daß das Rastteil (5, 35) als Rastelemente zwei Rastarme (22, 23; 52, 53) aufweist und mit diesen in Einbaulage das Halteteil (4, 34) an gegenüberliegenden Seiten seitlich überragt.

6. Beschlag nach Anspruch 4 oder 5, dadurch gekennzeichnet, daß die Rastelemente dauerelastisch ausgebildet sind.

7. Beschlag nach einem der Ansprüche 1 bis 6, dadurch gekennzeichnet, daß das Halteteil (4, 34) als Profil mit im wesentlichen U-förmigem Querschnitt ausgebildet ist und das Rastteil (5, 35) in Einbaulage an drei Seiten an entsprechenden Gegenflächen umgreift.

8. Beschlag nach einem der Ansprüche 1 bis 7, dadurch gekennzeichnet, daß das Halteteil (4, 34) und das Rastteil (5, 35) miteinander verrastbar sind.

9. Beschlag nach einem der Ansprüche 1 bis 8, dadurch gekennzeichnet, daß das Halteteil (4, 34) und das Rastteil (5, 35) miteinander verschraubbar sind.

10. Beschlag nach einem der Ansprüche 1 bis 8, dadurch gekennzeichnet, daß sich das mit dem Halteteil (4, 34) verbundene Rastteil (5, 35) mit Spiel parallel zu der Oberfläche des zugeordneten Elements an dem Halteteil (4, 34) abstützt.

11. Beschlag nach Anspruch 10, dadurch gekennzeichnet, daß das Gehäuse (2, 32) mittels einer Schraubverbindung an dem Rastteil (5, 35) mit dem Sockel (3, 33) verbindbar ist.
